(19) Europäisches Patentamt
European Patent Office
Office européen des brevets

(11) Veröffentlichungsnummer: **0 117 490**
**B1**

# (12) EUROPÄISCHE PATENTSCHRIFT

(45) Veröffentlichungstag der Patentschrift: **28.01.87**

(51) Int. Cl.⁴: **C 08 B 11/00**

(21) Anmeldenummer: **84101609.0**

(22) Anmeldetag: **16.02.84**

## (54) Verfahren zur Herstellung von Celluloseethern mit einem Dimethoxyethan enthaltenden Dispergierhilfsmittel.

(30) Priorität: **25.02.83 DE 3306621**

(43) Veröffentlichungstag der Anmeldung: **05.09.84 Patentblatt 84/36**

(45) Bekanntmachung des Hinweises auf die Patenterteilung: **28.01.87 Patentblatt 87/5**

(84) Benannte Vertragsstaaten: **AT BE CH DE FR GB IT LI NL SE**

(56) Entgegenhaltungen:
**US - A - 1 980 988**
**US - A - 2 553 695**
**US - A - 2 618 632**
**US - A - 2 682 535**
**US - A - 2 744 894**

(73) Patentinhaber: **HOECHST AKTIENGESELLSCHAFT, Postfach 80 03 20, D-6230 Frankfurt am Main 80 (DE)**

(72) Erfinder: **Kornrumpf, Wolfgang, Dr., Dipl.-Chem., Waldallee 75, D-6239 Eppstein-Bremthal (DE)**
Erfinder: **Hilbig, Josef, Dr., Dipl.-Chem., Seifer Weg 3a, D-6204 Taunusstein 4 (DE)**
Erfinder: **Perplies, Eberhard, Dr., Dipl.-Chem., Rhönstrasse 11, D-6229 Walluf (DE)**
Erfinder: **Felcht, Utz-Hellmuth, Dr., Dipl.-Chem., Hubertusstrasse 2, D-6232 Bad-Soden-Neuenhain (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Verfahren zur Herstellung von Celluloseethern mit einem Dimethoxyethan enthaltenden Dispergierhilfsmittel.

Die Erfindung betrifft ein Verfahren zur Herstellung von Celluloseethern, in dem ein Gemisch aus inerten organischen Lösemitteln als Dispergierhilfsmittel eingesetzt wird.

Die Herstellung von Celluloseethern mit einheitlichen oder unterschiedlichen Arten von Ethersubstituenten ist bekannt (siehe z.B. Ullmanns Encyklopädie der technischen Chemie, Band 9, Stichwort «Celluloseäther», Verlag Chemie – Weinheim, 4. Auflage 1975, S. 192 ff.), wobei diese im allgemeinen entweder a) nach dem Prinzip der Ethersynthese nach Williamson durch Umsetzung von Cellulose mit Alkyl- oder Aralkylhalogeniden (unter Verbrauch einer Base) und/oder b) bzw. c) durch Umsetzung von Cellulose mit aktivierten Reaktionspartnern (in Anwesenheit katalytischer Mengen einer Base) hergestellt werden:

a) $\text{Cell} - \underline{\bar{O}} - H + \text{Hal} - R^1 + \text{BOH}$

$\rightarrow \text{Cell} - \underline{\bar{O}} - R^1 + H_2O + \text{BHal}$

b) 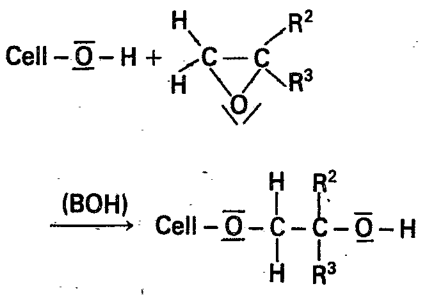


c) 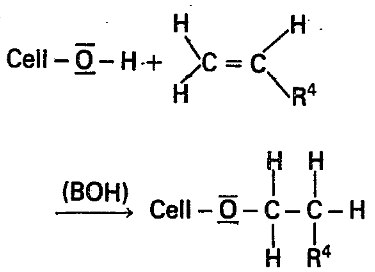


In diesen allgemeinen Gleichungen bedeuten:
$\text{Cell} - \underline{\bar{O}} - H$ eine zu verethernde Hydroxylgruppe am Cellulosemolekül,
Hal Chlor oder Brom,
$R^1$ einen Alkylrest von $C_1$ bis $C_{15}$, einen Aralkylrest von $C_7$ bis $C_{15}$, einen Carboxyalkylrest von $C_1$ bis $C_3$, einen Sulfonoalkylrest von $C_1$ bis $C_3$, einen Phosphonoalkylrest von $C_1$ bis $C_3$, einen Hydroxyalkylrest von $C_1$ bis $C_6$, oder einen N,N-Dialkylaminoalkylrest von $C_1$ bis $C_3$ für die Alkylgruppen,
$R^2$, $R^3$ Wasserstoff oder einen Alkylrest von $C_1$ bis $C_{13}$, wobei $R^2$ gleich $R^3$ oder davon verschieden ist,
BOH Base wie NaOH oder eine quaternäre Ammoniumbase,
$R^4$ einen gegebenenfalls N-substituierten Carbonsäureamid- oder Sulfonsäureamidrest oder einen Nitrilrest.

Durch gleichzeitiges oder stufenweises Einwirken von verschiedenen Veretherungsmitteln auf Cellulose können auch Cellulosemischether hergestellt werden, wobei neben einem Reaktionsablauf nach nur einer der angegebenen Varianten a bis c, insbesondere auch Reaktionen durchgeführt werden, die nach mindestens zwei der Varianten ablaufen. Beispiele für Reaktionsprodukte, die nach der Variante a) hergestellt werden können, sind: Methylcellulose (MC), Benzylcellulose (BC), Carboxymethylcellulose (CMC), Sulfonoethylcellulose (SEC), Phosphonomethylcellulose (PMC) oder N,N-Diethylaminoethylcellulose (DEAEC). Beispiele für Reaktionsprodukte, die nach der Variante b) hergestellt werden können, sind: Hydroxyethylcellulose (HEC) oder Hydroxypropylcellulose (HPC). Beispiele für Reaktionsprodukte, die nach der Variante c) hergestellt werden können, sind: Sulfonamidoethylcellulose (SAEC) oder Cyanethylcellulose (CNEC). Zu den Mischethern der Cellulose, deren Herstellung nach der gleichen oder nach verschiedenen der angegebenen Varianten ablaufen kann, zählen beispielsweise Methyl-hydroxyethylcellulose (MHEC), Ethylhydroxyethylcellulose (EHEC), Hydroxyethyl-hydroxypropylcellulose (HEHPC), Methyl-carboxymethylcellulose (MCMC), Hydroxyethyl-phosphonomethylcellulose (HEPMC) oder Methyl-hydroxyethylhydroxypropylcellulose (MHEHPC). Unter dem Begriff «Celluloseether» sind im Rahmen der folgenden Ausführungen sowohl Produkte mit einem einheitlichen Substituenten wie Hydroxyethylcellulose als auch Produkte mit mindestens zwei verschiedenen Substituenten wie Methylcarboxymethylcellulose zu verstehen.

Die meisten der bekannten Verfahren zur Herstellung von Celluloseethern werden in zwei Kernstufen durchgeführt:

1. Die Herstellung der «Alkalicellulose».
2. Die Veretherung des Cellulosemoleküls.

Zur Herstellung der «Alkalicellulose» wird Cellulose in kleinteiliger (z.B. gemahlener) Form in geeigneten technischen Aggregaten mit Wasser und Alkalihydroxiden (im allgemeinen NaOH, es sind aber auch andere Basen wie quaternäre Ammoniumbasen möglich) möglichst gleichmässig vermischt. Die Alkalihydroxide können dabei in fester Form oder in Form einer wässrigen Lösung zum Einsatz kommen. Für die Veretherungsreaktion selbst und damit für die Qualität des Reaktionsendprodukts ist die Gleichmässigkeit und Intensität des Vermischens von entscheidender Bedeutung. Die Alkalisierung erfolgt im allgemeinen bei möglichst niedriger Temperatur, z.B. Raumtemperatur und weniger, um einen Abbau des Polymeren (das sogenannte «Reifen») zu unterdrükken; unter bestimmten Umständen, beispielsweise der späteren Herstellung niedrigviskoser Celluloseether, kann dieser Abbau jedoch auch erwünscht sein. In der Alkalisierungsstufe kann auch bereits das Veretherungsmittel zugegeben werden, wobei jedoch im allgemeinen zur Durchführung der eigentlichen Veretherungsreaktion die Temperatur noch erhöht werden muss.

Die eigentliche Veretherungsstufe wird häufig so durchgeführt, dass die in der ersten Stufe erzeugte Alkalicellulose zusammen mit dem inzwischen zugegebenen Veretherungsmittel auf Temperaturen zwischen 30 und 120°C erhitzt wird. Auch in der zweiten Stufe ist eine intensive Durchmischung für die Qualität des Reaktionsprodukts und für die Wirtschaftlichkeit des Verfahrens sehr wichtig, da beispielsweise eine gute Substitutionsausbeute bei möglichst geringem Mengeneinsatz an Veretherungsmittel(n) angestrebt wird.

Für beide Reaktionsstufen sind sowohl kontinuierliche als auch diskontinuierliche Verfahrensweisen bekannt. Es können bei bestimmten Reaktionskomponenten auch beide Stufen so zusammengefasst werden, dass keine Voralkalisierung der Cellulose stattfindet. Zur besseren Durchmischung des heterogenen Reaktionsgemenges können in beiden Stufen, oder zumindest in einer der beiden Stufen, Dispergierhilfsmittel (Suspensionsmittel) eingesetzt werden, wobei sowohl wasserlösliche als auch in Wasser mehr oder weniger unlösliche organische Lösemittel bekannt sind, dazu zählen beispielsweise:

Ethylenglykolmonoalkylether, Ethylenglykoldiethylether, Dioxan, Tetrahydrofuran, Alkanole (insbesondere Isopropanol oder tert. Butanol), Alkoxyalkanole, Toluol, Heptan, Gemische aus Tetrachlorkohlenstoff und Ethanol, Aceton, Methylethylketon; Mischungen aus Benzol, Toluol oder Xylol und Ethanol; Glykole, Dioxan; Mischungen aus Alkanen (ab $C_6$), Aromaten, aliphatischen Ketonen, aliphatischen Ethern oder halogenierten Alkanen und Alkanolen ($C_2$ bis $C_4$), Dimethylsulfoxid, Dioxan oder Tetrahydrofuran; Xylol, Gemisch aus tert.-Butanol und Aceton, Mischungen aus Alkanen oder Aromaten ($C_6$ bis $C_{12}$) und Alkanolen ($C_1$ bis $C_4$).

Diese aus dem Stand der Technik bekannten organischen Lösemittel oder Lösemittelgemische zeigen jedoch bei ihrem Einsatz während der Herstellung von Alkalicellulose und/oder während der Veretherung von Cellulose mindestens einen der nachfolgend aufgeführten Nachteile:

– Sie können Nebenreaktionen mit starken Basen eingehen, beispielsweise entsteht so aus Aceton Diacetonalkohol.

– Sie können mindestens teilweise mit Wasser nicht mischbar sein, so dass dann Phasentrennungen eintreten (z.B. bei Alkanen, Aromaten oder aliphatischen Ethern).

– Hydroxylgruppen enthaltende organische Lösemittel oder grössere Anteile von diesen in Gemischen können mit den Veretherungsmitteln konkurrierend zur Polyhydroxyverbindung Cellulose reagieren, so dass die Substitutionsausbeute – bezogen auf die Cellulose – gesenkt wird (z.B. bei Alkanolen oder Alkoxyalkanolen).

– Sie können toxisch sein, so dass sie in zeitgemässen Verfahren möglichst nicht mehr eingesetzt werden (z.B. bei Dimethylsulfoxid oder Dioxan).

– Der Siedepunkt des organischen Lösemittels ist höher als der des Wassers, so dass eine – in einem zeitgemässen Verfahren erforderliche – destillative Rückgewinnung unwirtschaftlich ist, und ausserdem die bei der Veretherung als Nebenprodukte anfallenden Salze dann im organischen Lösemittel zurückbleiben (z.B. bei Ethylenglykoldiethylether mit einem Siedepunkt ($Kp_{760}$) von 123,5°C).

– Sie können dazu neigen, gefährliche Nebenprodukte zu bilden (z.B. bei Tetrahydrofuran die Bildung von Peroxiden).

In der prioritätsälteren, nicht-vorveröffentlichten DE-OS 3147434 wird ein Verfahren zur Herstellung von Celluloseethern beschrieben, das in Gegenwart von Wasser, Basen und mindestens einem inerten organischen Lösemittel durchgeführt wird, wobei als solches Lösemittel Dimethoxyethan eingesetzt wird. Bezüglich der Nennung von weiterem Stand der Technik, von Verfahrensbedingungen u.ä. wird ausdrücklich auf diese DE-OS Bezug genommen.

Aufgabe der vorliegenden Erfindung ist es, ein als Dispergierhilfsmittel in den Celluloseethersynthesen geeignetes organisches Lösemittelgemisch aufzufinden, das in einer Weiterbildung des in der DE-OS genannten Verfahrens eingesetzt werden kann.

Die Erfindung geht aus von dem Verfahren zur Herstellung von Celluloseethern aus Cellulose und Alkylierungsmitteln in Gegenwart von Wasser, Basen und Dimethoxyethan als inertem organischen Lösemittel. Das erfindungsgemässe Verfahren ist dann dadurch gekennzeichnet, dass zusätzlich mindestens ein weiteres organisches Lösemittel aus der Gruppe Alkanole, Alkandiole und Alkoxyalkanole eingesetzt wird.

Dimethoxyethan (auch Ethylenglykoldimethylether oder Dimethylglykol) ist literaturbekannt; es ist eine farblose, mit Wasser in jedem Verhältnis mischbare, nichttoxische Flüssigkeit eines Siedepunkts ($Kp_{760}$) von 86°C dessen Azeotrop mit Wasser (9:1) bei etwa 80°C siedet.

Zu den Alkanolen, Alkandiolen und Alkoxyalkanolen zählen insbesondere Alkanole von $C_1$ bis $C_5$, Alkandiole von $C_2$ oder $C_3$ (oder auch oligomere oder polymere Individuen mit Einheiten aus diesen Alkandiolen) und Alkoxy ($C_1$ bis $C_4$)alkan($C_2$ oder $C_3$)ole, bevorzugt werden Methanol, Ethanol, Isopropanol, tert. Butanol und Ethylenglykol (Ethandiol[1,2]). Diese organischen Lösemittel sind einzeln oder im Gemisch neben dem Dimethoxyethan im Alkalisierungs- und/oder Veretherungsgemisch vorhanden. Es sind – abhängig von dem oder den Veretherungsmittel(n), d.h. von der Art des bzw. der zu erzielenden Ethersubstituenten – grundsätzlich alle Mischungsverhältnisse zwischen Dimethoxyethan und dem oder den anderen organischen Lösemitteln möglich, bevorzugt werden jedoch nicht mehr als 50 Gew.-% an Alkanolen, Alkandiolen und/oder Alkoxyalkanolen zugesetzt, insbesondere 0,1 bis 30 Gew.-%. Von den dem Dimethoxyethan zuzumischenden organischen Lösemitteln werden bevorzugt Methanol und/oder Isopropanol eingesetzt, da diese in der Praxis der Celluloseetherherstellung sehr

häufig auch in Nachbehandlungsstufen wie der Reinigung des Rohprodukts von Salzen angewendet werden, wodurch ein gezieltes «Recycling» möglich wird, teilweise auch ohne gesonderte Auftrennung des Lösemittelgemisches in seine Komponenten. Wie auch aus den weiter unten beschriebenen Beispielen eindeutig hervorgeht, kann der Einsatz eines Gemisches aus Dimethoxyethan und mindestens einem organischen Lösemittel aus der Gruppe Alkanole, Alkandiole und Alkoxyalkanole als Dispergierhilfsmittel in einem Verfahren zur Herstellung von Celluloseethern, insbesondere zeigt sich das bei der Herstellung von wasserlöslichen Celluloseethern, bewirken, dass teilweise die Substitutionsausbeute steigt und der Rückstand an unlöslichen Anteilen sinkt. Diese Effekte sind mit dem Einsatz der Einzelkomponenten des Gemisches an organischen Lösemitteln nicht oder nicht in diesem Masse zu erzielen, so dass ein eindeutig synergistisches Zusammenwirken vorliegt. Die sonst bei alleinigem Einsatz der genannten organischen Lösemittel häufig zu beobachtende Nebenreaktion mit beispielsweise den zugesetzten Veretherungsmitteln tritt im erfindungsgemässen Verfahren (d.h. im Gemisch mit Dimethoxyethan) nicht oder nur in untergeordnetem Masse auf, dies gilt insbesondere dann, wenn im Bereich von 0,1 bis 30 Gew.-% an diesen Lösemitteln gearbeitet wird.

Das erfindungsgemässe Verfahren kann diskontinuierlich oder auch kontinuierlich in einem der von der Celluloseetherchemie her bekannten Aggregate (z.B. Kneter, Rührkessel oder Wurfmischer) durchgeführt werden. Wenn die Temperatur des Reaktionsgemisches so hoch gewählt wird, dass sie über der Siedetemperatur des Gemisches aus organischen Lösemitteln/$H_2O$ liegt, empfiehlt sich die Durchführung des erfindungsgemässen Verfahrens in einer Druckapparatur; auch bei Einsatz von unter Normalbedingungen (Normaldruck, Raumtemperatur) bereits gasförmigen Reaktionskomponenten wird üblicherweise in einer Druckapparatur gearbeitet (z.B. bei Einsatz von Ethylenoxid als Veretherungsmittel). Die in den folgenden Ausführungen angegebenen Mengenanteile für die Komponenten geben lediglich die Summe der Anteile der zur Reaktion erforderlichen Komponenten zu Beginn der Veretherungsstufe an, dann liegt z.B. bei separater Alkalisierungsstufe bereits ein Teil der Cellulose und des Alkalimetallhydroxids als Alkalicellulose vor; oder wenn das Veretherungsmittel beispielsweise in der Säureform (z.B. Monochloressigsäure zur Herstellung vom CMC) in das Reaktionsgemisch eingegeben wird, so müssen zur Neutralisation zusätzliche Basenanteile eingesetzt werden.

Die eingesetzte Cellulose ist entweder natürlicher Herkunft, beispielsweise Baumwoll-Linters oder Holz-Zellstoff, oder liegt in regenerierter Form wie als Cellulosehydrat vor; die Teilchengrösse der Cellulose sollte vor Beginn der Reaktion möglichst kleiner als etwa 2,5 mm, insbesondere kleiner als etwa 1 mm sein, wobei diese Teilchengrösse beispielsweise durch Mahlung der längerfaserig angelieferten Cellulose zu «Pulvern» erreicht werden kann. Im erfindungsgemässen Verfahren können – verglichen mit bekannten Verfahren – bei gleicher Wirksamkeit auch Teilchengrössen zum Einsatz kommen, die sonst eher nicht verwendet werden.

Die Basen werden bevorzugt als Alkalimetallhydroxid – üblicherweise NaOH, aber auch KOH oder LiOH – in fester Form oder in gelöster Form als wässrige Alkalimetallhydroxid-Lösung (beispielweise in 10 bis 50 gew.-%iger Form) eingesetzt, aber auch Ammoniumbasen können verwendet werden. Bevorzugt werden im erfindungsgemässen Verfahren etwa 1 bis 30 Gew.-Teile Dimethoxyethan pro Gew.-Teil Cellulose eingesetzt, besonders bevorzugt 3 bis 18 Gew.-Teile. Sofern Alkalimetallhydroxide als Basen eingesetzt werden, beträgt ihr Anteil im allgemeinen 0,8 bis 12,0 Mol, insbesondere 1,0 bis 6,0 Mol, pro Mol Cellulose (als Anhydro-D-glukose-Einheit gerechnet). Der Wasseranteil im Reaktionsgemisch wird zweckmässig so gewählt, dass er im Bereich von 5 bis 25 Mol pro Mol Cellulose liegt; oder wenn als Bezugsgrösse das Flüssigkeitsgemisch organische Lösemittel/Wasser dienen soll, so liegt der Anteil des Wassers im Gemisch bei 3 bis 40 Gew.-%. Als Veretherungsmittel werden bevorzugt Alkylchloride von $C_1$ bis $C_3$, Alkylenoxide von $C_2$ bis $C_4$ und/oder Chloralkansäuren von $C_2$ bis $C_6$ bzw. deren Salze oder hydrolisierbare Ester eingesetzt, insbesondere Methylchlorid, Ethylchlorid, Ethylenoxid, Propylenoxid und/oder Monochloressigsäure oder ein entsprechendes Salz oder Ester. Es können aber auch Butylenoxid-1,2, Monochlorpropionsäure, Chlorethansulfonsäure, Vinylsulfonsäure, Acrylnitril, Chlormethanphosphonsäure, 1-N,N-Diethylamino-2-chlorethan oder 2,3-Epoxypropyltrimethylammoniumchlorid zur Reaktion gebracht werden. Der Anteil des Veretherungsmittels beträgt üblicherweise 0,05 bis 25 Mol, insbesondere 0,1 bis 10 Mol, pro Mol Cellulose.

Bei der praktischen Durchführung des erfindungsgemässen Verfahrens wird zweckmässig zuerst die Cellulose im Gemisch aus organischen Lösemitteln, Wasser und Alkalimetallhydroxid (oder quaternärer Ammoniumbase) alkalisiert, wonach die Zugabe des Veretherungsmittels in einer oder mehreren Stufe(n) (abhängig von der Art des oder der Veretherungsmittel[s]) erfolgt. Es ist aber auch eine Alkalisierung ohne Anwesenheit der organischen Lösemittel möglich, wobei deren Zugabe dann erst bei der oder den Veretherungsstufe(n) erfolgt, oder auch eine Zugabe der vollständigen Basenmenge erst bei der oder den Veretherungsstufe(n), die dann gleichzeitig die Alkalisierungsstufe darstellt, d.h. ein separates Alkalisieren ist in dieser Verfahrensvariante nicht erforderlich. Die jeweiligen Reaktionsgemische und Reaktionsgefässe können bekanntermassen auch mit Inertgasen wie Stickstoff gespült werden, um Sauerstoff zu entfernen und so hohe Viskositäten der Reaktionsprodukte zu erreichen; auch sogenannte Antioxidantien (siehe beispielsweise DE-OS 2000082) wie Pyrogallol oder Gallussäure

können zur Verhinderung des Viskositätsabbaus (Depolymerisation) zugesetzt werden.

Alle Stufen, gleichgültig, ob als separate Alkalisierungs- oder Veretherungsstufe oder als Kombination beider Stufen durchgeführt, werden in der Regel unter guter Durchmischung gefahren. In der separaten Alkalisierungsstufe wird üblicherweise bei Raumtemperatur (von 0 °C, insbesondere von 15 bis 30 °C) gearbeitet, die Veretherung verläuft besonders erfolgreich bei einer Temperatur zwischen 30 und 120 °C, insbesondere bis zu 90 °C. Bei Durchführung der Alkalisierung und Veretherung in einer Stufe kann diese zunächst einige Zeit bei Raumtemperatur gefahren werden, bevor auf die endgültige, zur Veretherung erforderliche Temperatur erhöht wird. Wenn das Verfahren ohne Einsatz von Druckaggregaten ablaufen soll, empfiehlt sich ein Arbeiten unterhalb der Siedetemperatur der organischen Lösemittel bzw. von azeotropen Gemischen aus diesen und Wasser. Bei Einsatz von gasförmigen Veretherungsmittel (wie Ethylenoxid oder Methylchlorid) ist allerdings ein druckloses Arbeiten nicht zweckmässig. Der sich maximal im Reaktionsgefäss einstellende Druck entspricht der Summe der Partialdrucke der Komponenten im Reaktionsgemisch.

Die erforderlichen Zeiten in der Veretherungsstufe liegen – je nach Reaktionstemperatur – im allgemeinen zwischen 20 min und 8 h. In einer trennvorrichtung (z.B. einer Zentrifuge) wird das Rohprodukt, bevorzugt nach Zugabe von Säure bis zur Neutralisation der noch unverbrauchten Basen, zuächst vom Hauptteil der flüssigen Komponenten befreit und kann gegebenenfalls danach einer Extraktion zur Entfernung anhaftender Salze unterzogen werden; abschliessend wird es getrocknet und kann gegebenenfalls gemahlen, mit weiteren Komponenten vermischt oder auch granuliert werden; diese Aufarbeitungs-, Reinigungs- und Nachbehandlungsmethoden sind die in der Celluloseetherchemie üblichen und benötigen deshalb keine ausführliche Beschreibung.

Wie auch aus den nachstehenden Beispielen hervorgeht, werden bei der Synthese der verschiedenen Celluloseethertypen beispielsweise die folgenden organischen Lösemittelgemische bevorzugt: bei der MHEC-Herstellung ein Gemisch aus 1 bis 20 Gew.-% Isopropanol und 80 bis 99 Gew.-% Dimethoxyethan, auch der Zusatz von Methanol zu diesem Gemisch bis zu einem Anteil von etwa 3 Gew.-% ist möglich; bei der HEC-Herstellung und bei der NaCMC-Herstellung sind Gemische aus Dimethoxyethan und Isopropanol in verschiedensten Verhältnissen (insbesondere von bis zu 50 Gew.-% an einer Komponente), bei der NaCMC-Herstellung sind auch Gemische aus 70 bis 99 Gew.-% Dimethoxyethan und 1 bis 30 Gew.-% Methanol möglich, wobei auch Mischungen aus den drei Lösemitteln möglich sind.

Die nach dem erfindungsgemässen Verfahren herstellbaren Celluloseether können auf den bekannten Gebieten der Technik eingesetzt werden, also beispielsweise als Verdickungsmittel, Klebstoff, Zusatzmittel auf dem Baustoffgebiet, Zusatzmittel auf dem Lebensmittelgebiet o.ä.

In den folgenden Beispielen verhalten sich Gew.-Teile zu Vol.-Teilen wie kg zu $dm^3$, die Prozentangaben sind auf das Gewicht bezogen. Die angegebenen Viskositätswerte wurden – wenn nichts anderes angegeben ist – im Höppler-Kugelfallviskosimeter in 2%iger wässriger Lösung bei 20 °C bestimmt. Der «DS» ist der Substitutionsgrad, d.h. die mittlere Anzahl von substituierten OH-Gruppen pro Anhydro-D-glucose-Einheit; er liegt bei Cellulose im Bereich von 0,0 bis 3,0. Der «MS» ist der molare Substitutionsgrad, d.h. die mittlere Anzahl von Molen des substituierenden Reagens, die pro Mol Anhydro-D-glucose-Einheit etherartig gebunden wurden; er kann bei Cellulose auch grösser als 3,0 sein; er wird normalerweise anstelle des DS zur Charakterisierung solcher Substituenten am Celluloseether verwendet, die durch Mehrfachsubstitution an einer OH-Gruppe entstehen können, d.h. beispielsweise beim Hydroxyalkylsubstituenten, weil die entstehenden OH-Gruppen der Hydroxyalkylgruppen ebenfalls – wie die OH-Gruppen der Cellulose selbst – substituierbar sind.

Vergleichsbeispiel V1

Es werden 172 Gew.-Teile eines Fichtensulfitzellstoffs (0,5 mm Mahlung) in 1300 Gew.-Teilen Dimethoxyethan (DME, 7,6 Gew.-Teile pro Gew.-Teil Cellulose) suspendiert und in einem druckfesten Rührkessel innerhalb von 5 min mit einer Lösung aus 253 Gew.-Teilen einer 39,5%igen NaOH-Lösung (2,75 Mol NaOH pro Mol Cellulose) versetzt. Das Gemisch wird während 45 min bei Raumtemperatur gerührt, es werden dann 17,6 Gew-.Teile Ethylenoxid (0,4 Mol pro Mol Cellulose) und 162 Gew.-Teile Methylchlorid (3,2 Mol pro Mol Cellulose) hinzugegeben und das Veretherungsgemisch während 60 min bei 40 °C und während weiterer 90 min bei 95 °C zur Reaktion gebracht. Nach der üblichen Aufarbeitung (z.B. einer Heisswasserwäsche) wird eine MHEC mit folgenden Eigenschaften erhalten (ca. 0,13 Mol NaOH bleiben unumgesetzt): $MS_{HE}$ von 0,23, $DS_M$ von 1,65, Viskosität von 23000 mPa·s, Rückstand von etwa 2%; Koagulationspunkt bei 73 °C.

Beispiel 1

Es wird nach den Angaben des Vergleichsbeispiels V1 vorgegangen, aber in einem Gemisch aus 1160 Gew.-Teilen DME und 140 Gew.-Teilen Isopropanol (IPA 100%ig) alkalisiert und verethert. Das Reaktionsprodukt ist bezüglich Veretherungsgrad und Viskosität weitgehend identisch mit der MHEC nach V1, es zeigt jedoch eine deutlich verbesserte Klarlöslichkeit in Wasser, was sich beispielsweise durch einen Rückstand von nur 0,4% und eine deutlich (auf etwa die Hälfte bis ein Drittel des in V1 erhaltenen Wertes) verringerte Trübung einer 1%igen wässrigen Lösung in einem Photometer äussert.

Vergleichsbeispiel V2

Es wird nach den Angaben des Vergleichsbeispiels V1 vorgegangen, aber in 1300 Gew.-Teilen IPA (100%ig) alkalisiert und verethert. Das Reaktionsprodukt zeigt deutlich schlechtere Eigenschaften verglichen mit einer MHEC nach V1 und insbesondere nach Beispiel 1: $MS_{HE}$ von 0,16, $DS_M$ von 1,08, Viskosität von 10500 mPa·s, Rückstand von etwa 10 bis 11%; Koagulationspunkt bei 95 °C, Trübung etwa 10mal stärker als in V1.

Beispiele 2 bis 7 und Vergleichsbeispiele V3/V4

Es wird eine MHEC nach den Verfahrensangaben des Vergleichsbeispiels V1 hergestellt, wobei ein Molverhältnis der Cellulose : NaOH : Methylchlorid : Ethylenoxid : $H_2O$ von 1 : 2,75 : 3,2 : 0,4 : 8,5 eingehalten wird. Die Menge an organischen Lösemitteln beträgt in allen Ansätzen 1300 Gew.-Teile, die Produktcharakteristika können der Tabelle I entnommen werden. Die Trübung der Lösung ist im Vergleichsbeispiel V3 etwa 3- bis 6mal so gross wie in den erfindungsgemässen Beispielen und im Vergleichsbeispiel V4 mindestens 20mal so gross.

Tabelle I

| Bsp. | Gew.-% an DME | IPA | Rückstand (Gew.-%) | $DS_M$ | $MS_{HE}$ | nicht umgesetztes NaOH (Mol) |
|---|---|---|---|---|---|---|
| V3 | 100 | 0 | 2,0 | 1,60 | 0,22 | 0,10 |
| V2 | 96,5 | 3,5 | 1,5 | 1,61 | 0,22 | 0,07 |
| V3 | 94,3 | 5,7 | 1,0 | 1,59 | 0,21 | 0,07 |
| V4 | 92,9 | 7,1 | 1,1 | 1,63 | 0,22 | 0,03 |
| V5 | 89,2 | 10,8 | 0,5 | 1,63 | 0,23 | 0,03 |
| V6 | 85,4 | 14,6 | 0,8 | 1,62 | 0,21 | 0,05 |
| V7 | 77,6 | 100 | 1,0 | 1,58 | 0,20 | 0,12 |
| V4 | 0 | | 11,0 | 1,08 | 0,16 | 0,03 |

Beispiel 8

Es wird nach den grundsätzlichen Verfahrensangaben des Vergleichsbeispiels V1 vorgegangen, aber mit 17,2 Gew.-Teilen eines Fichtensulfitzellstoffs, 120 Gew.-Teilen DME, 10 Gew.-Teilen IPA und 29,6 Gew.-Teilen einer 48,7%igen wässrigen NaOH-Lösung. Die Alkalisierung dauert 35 min, und es werden 1,8 Gew.-Teile Ethylenoxid und 22,9 Gew.-Teile Methylchlorid zugegeben, es wird während 10 min auf 65 °C aufgeheizt und 35 min bei dieser Temperatur und 60 min bei 105 °C die Reaktion durchgeführt. Die erhaltene MHEC weist folgende Eigenschaften auf: $MS_{HE}$ von 0,15, $DS_M$ von 1,95, Viskosität von 21000 mPa·s, Rückstand von 0,30%; Koagulationspunkt bei 68 °C, die Trübung liegt in der Grössenordnung von denen der Beispiele 3 bis 7.

Vergleichsbeispiel V5

Es wird nach den Angaben des Beispiels 8 vorgegangen, aber mit 130 Gew.-Teilen DME als alleinigem organischen Lösemittel. Die erhaltene MHEC ist mit der MHEC nach Beispiel 8 bezüglich Veretherungsgrad, Viskosität und Koagulationspunkt weitgehend identisch, sie zeigt jedoch eine verschlechterte Klarlöslichkeit in Wasser, was sich beispielsweise durch einen Rückstand von 0,75% und eine deutlich (auf etwa das Dreifache des im Beispiel 8 erhaltenen Wertes) gesteigerte Trübung äussert.

Beispiel 9

47 Gew.-Teile (0,27 Mol) eines Baumwoll-Linters (0,5 mm Mahlung) werden in einem Gemisch aus 89,0 Vol.-Teilen Methanol, 633,0 Vol.-Teilen DME und 70,5 Vol.-Teilen $H_2O$ suspendiert, und zu diesem Gemisch werden 14,2 Gew.-Teile (0,355 Mol) NaOH zugegeben. Das Gemisch wird während 30 min unter Rühren alkalisiert, es werden dann 35 Gew.-Teile Na-monochloracetat zugegeben und das Veretherungsgemisch während 90 min bei 65 °C zur Reaktion gebracht. Nach der üblichen Aufarbeitung wird eine NaCMC mit den in Tabelle II angegebenen Eigenschaften erhalten.

Vergleichsbeispiel V6

Es wird nach den Angaben des Beispiels 9 vorgegangen, aber mit 712 Vol.-Teilen DME als alleinigem organischen Lösemittel. Die Trübung einer 1%igen wässrigen Lösung ist etwa 4mal stärker als im Beispiel 9.

Beispiel 10

Es wird nach den Angaben des Beispiels 9 vorgegangen, aber mit Fichtensulfitzellstoff, 674 Vol.-Teilen DME, 75 Vol.-Teilen IPA, 46 Vol.-Teilen $H_2O$, 26,7 Gew.-Teilen NaOH (0,67 Mol) und 28,7 Gew.-Teilen (0,3 Mol) Monochloressigsäure.

Vergleichsbeispiel V7

Es wird nach den Angaben des Beispiels 10 vorgegangen, aber mit 749 Vol.-Teilen DME als alleinigem organischen Lösemittel und 52,2 Gew.-Teilen Zellstoff. Die Trübung ist etwa 5mal stärker als in Beispiel 10.

Tabelle II

| Bsp. | Gew.-% an DME | IPA od. Methanol | DS | Substitutionsausbeute (%) | Viskosität (1%ige Lösung) (mPa·s) | Rückstand (%) |
|---|---|---|---|---|---|---|
| 9 | 88 | 12 | 0,71 | 64 | 2150 | 1,20 |
| V6 | 100 | 0 | 0,61 | 55 | 2700 | 2,80 |
| 10 | 90 | 10 | 0,80 | 73 | 10500 | 0,65 |
| V7 | 100 | 0 | 0,74 | 67 | 12000 | 1,50 |

Beispiele 11 bis 15 und Vergleichsbeispiele V8 bis V16

Es werden (Mengen siehe Tabelle III) das Cellulosematerial – Fichtensulfitzellstoff in den Beispielen 11 bis 13 und V8 bis V12 und Baumwoll-Linters in den Beispielen 14/15 und V13 bis V16 – und das Dispergierhilfsmittel (850 Vol.-Teile pro 100 Gew.-Teile Cellulose) in einen Kneter eingefüllt. Anschliessend wird die wässrige NaOH-Lösung (1 Mol NaOH pro Mol Cellulose in den Beispielen 11 bis 13 und V8 bis V12 und 1,3 Mol NaOH in den Beispielen 14/15 und V13 bis V16) eingefüllt und das Gemisch während 30 min bei Raumtemperatur alkalisiert. Diese Suspension wird quantitativ in einen Autoklaven überführt, das Ethylenoxid

zugegeben und nach Schliessen des Autoklaven wird unter Rühren 60 min bei 30 °C und 60 min bei 70 °C umgesetzt. Nach der üblichen Aufarbeitung (wie Ansäuern und Salzfrei-Waschen) wird eine HEC mit den in Tabelle III angegebenen Eigenschaften erhalten. Dabei zeigt es sich, dass die Substitutionsausbeute (Selektivität) in reinem IPA wesentlich niedriger ist als in reinem DME, aber im Gemisch aus beiden Lösemitteln kann sie noch leicht verbessert sein. Die Trübung einer 1%igen wässrigen Lösung bewegt sich bei Produkten nach einem Verfahren, in dem nur IPA eingesetzt wird, etwa in der Grössenordnung der Gemische, ist aber bei dem Einsatz von reinem DME etwa mindestens doppelt so hoch; d.h. auch hier zeigt es sich, dass Gemische aus DME und IPA unter Beibehaltung einer hohen Substitutionsausbeute (d.h. sparsamer Rohstoffeinsatz) und einer verringerten Nebenproduktbildung (d.h. geringer Rohstoffverlust und geringe Abwasserbelastung) gegenüber einem Einsatz von reinem DME Produkte mit einer besseren Lösungsqualität liefern.

Tabelle III

| Bsp. | Mol pro Mol Cellulose an $H_2O$ | Ethylenoxid | Gew.-% an DME | IPA | Viskosität* (mPa·s) | MS | Substitutionsausbeute (%) |
|---|---|---|---|---|---|---|---|
| V8 | 10,0 | 4,0 | 100 | 0 | 35000 | 2,5 | 62 |
| V9 | 10,0 | 4,0 | 100 | 0 | 41000 | 2,6 | 65 |
| V10 | 10,0 | 4,0 | 100 | 0 | 51000 | 2,7 | 67 |
| 11 | 10,0 | 4,0 | 90 | 10 | 29000 | 2,8 | 70 |
| 12 | 10,0 | 4,0 | 80 | 20 | 11000 | 2,8 | 70 |
| 13 | 10,0 | 4,0 | 80 | 20 | 18000 | 2,6 | 66 |
| V11 | 15,9 | 4,5 | 0 | 100 | 26000 | 2,0 | 45 |
| V12 | 15,9 | 4,5 | 0 | 100 | 30000 | 2,0 | 44 |
| V13 | 16,2 | 5,0 | 100 | 0 | 4500 | 2,7 | 54 |
| V14 | 16,2 | 5,0 | 100 | 0 | 13000 | 3,0 | 60 |
| V15 | 13,0 | 4,0 | 100 | 0 | 38000 | 2,4 | 60 |
| V16 | 13,0 | 4,0 | 100 | 0 | 65000 | 2,4 | 60 |
| 14 | 13,0 | 4,0 | 95 | 5 | 6700 | 2,4 | 60 |
| 15 | 13,0 | 4,0 | 95 | 5 | 2700 | 2,5 | 62 |

* Unterschiedliche Viskositätswerte sind u.a. von der Cellulosequalität abhängig und auch darauf zurückzuführen, dass ein unterschiedlicher Viskositätsabbau stattfindet, wenn nicht auf stets gleichbleibende Vorbereitungen (Sauerstoffanschluss) und Rahmenbedingungen geachtet wird.

Beispiele 16 und 19 und Vergleichsbeispiele V17 bis V21

Es wird prinzipiell nach den Angaben der vorstehenden Beispiele und Vergleichsbeispiele vorgegangen, aber mit Baumwoll-Linters und 1,3 Mol NaOH pro Mol Cellulose. Die Ansätze werden in einem etwa 300mal grösseren Reaktionsgefäss mit entsprechend grösseren Mengen der Komponenten gefahren. Das Reaktionsgefäss weist einen zusätzlichen Intensivmischer (Homogenisierpumpe in «Bypass»-Anordnung) auf, das Reaktionsgefäss wird mehrmals mit Stickstoff geflutet. Die erste Veretherungsstufe wird während 120 min ausgeführt (Mengen und Ergebnisse siehe Tabelle IV). In den Beispielen 16 bis 19 und V17 bis V19 werden nicht 850, sondern 1160 Vol.-Teile Dispergierhilfsmittel eingesetzt. Die Trübungen bewegen sich im Rahmen der vorstehenden Beispiele.

Tabelle IV

| Bsp. | Mol pro Mol Cellulose an $H_2O$ | Ethylenoxid | Gew.-% an DME | IPA | Viskosität* (mPa·s) | MS | Substitutionsausbeute (%) |
|---|---|---|---|---|---|---|---|
| V17 | 13,6 | 4,5 | 100 | 0 | 68000 | 2,9 | 65 |
| V18 | 13,6 | 4,5 | 100 | 0 | 12000 | 2,9 | 65 |
| V19 | 13,6 | 4,5 | 100 | 0 | 59000 | 2,9 | 65 |
| 16 | 13,6 | 4,5 | 97,5 | 2,5 | 125000 | 2,9 | 65 |
| 17 | 13,6 | 4,5 | 97,5 | 2,5 | >150000 | 2,9 | 65 |
| 18 | 13,6 | 4,5 | 92,5 | 7,5 | 130000 | 2,9 | 65 |
| 19 | 13,6 | 4,5 | 92,5 | 7,5 | 12000 | 2,7 | 60 |
| V20 | 16,2 | 5,5 | 0 | 100 | 40000 | 2,9 | 53 |
| V21 | 16,2 | 5,5 | 0 | 100 | 35000 | 3,1 | 56 |

* siehe bei Tabelle III

## Patentansprüche

1. Verfahren zur Herstellung von Celluloseethern aus Cellulose und Veretherungsmitteln in Gegenwart von Wasser, Basen und Dimethoxyethan als inertem organischen Lösemittel, dadurch gekennzeichnet, dass zusätzlich mindestens ein weiteres organisches Lösemittel aus der Gruppe Alkanole, Alkandiole und Alkoxyalkanole eingesetzt wird.

2. Verfahren nach Anspruch 1, dadurch gekennzeichnet, dass das Verfahren zweistufig a) in einer Alkalisierungsstufe und b) in einer nachfolgenden Veretherungsstufe durchgeführt und die organischen Lösemittel bereits in der Stufe a) eingesetzt werden.

3. Verfahren nach Anspruch 1, dadurch gekennzeichnet, dass das Verfahren zweistufig a) in einer Alkalisierungsstufe und b) in einer nachfolgenden Veretherungsstufe durchgeführt und die organischen Lösemittel nach Beendigung der Stufe a) oder während der Durchführung der Stufe b) eingesetzt werden.

4. Verfahren nach einem der Ansprüche 1 bis 3, dadurch gekennzeichnet, dass 1 bis 30 Gew.-Teile der organischen Lösemittel pro Gew.-Teil Cellulose eingesetzt werden.

5. Verfahren nach einem der Ansprüche 1 bis 4, dadurch gekennzeichnet, dass als Veretherungsmittel ein Alkylchlorid von $C_1$ bis $C_3$, ein Alkylenoxid von $C_2$ bis $C_4$ und/oder eine Chloralkansäure von $C_2$ bis $C_6$ bzw. eines ihrer Salze oder einer ihrer Ester eingesetzt werden.

6. Verfahren nach einem der Ansprüche 1 bis 5, dadurch gekennzeichnet, dass der Anteil der von Dimethoxyethan verschiedenen organischen Lösemittel im Gemisch bis zu 50% beträgt.

7. Verfahren nach Anspruch 6, dadurch gekennzeichnet, dass der Anteil dieser organischen Lösemittel 0,1 bis 30 Gew.-% beträgt.

**Claims**

1. Process for the preparation of cellulose ethers from cellulose and etherifying agents in the presence of water, bases and dimethoxyethane as an inert organic solvent, wherein at least one further organic solvent selected from the group including alkanols, alkane diols and alkoxy alkanols is used.

2. Process as claimed in claim 1, wherein the process is carried out in two stages, a) in an alkalisation stage and b) in a subsequent etherification stage, and the organic solvents are employed as early as in stage a).

3. Process as claimed in claim 1, wherein the process is carried out in two stages, a) in an alkalisation stage and b) in a subsequent etherification stage, and the organic solvents are employed after the completion of stage a) or while stage b) is being carried out.

4. Process as claimed in any one of claims 1 to 3, wherein 1 to 30 parts by weight of the organic solvents are employed per 1 part by weight of cellulose.

5. Process as claimed in any one of claims 1 to 4, wherein the etherifying agent employed is an alkyl chloride from $C_1$ to $C_3$, an alkylene oxide from $C_2$ to $C_4$ and/or a chloroalkanoic acid from $C_2$ to $C_4$, or one of its salts or esters.

6. Process as claimed in any of claims 1 to 5, wherein the proportion of organic solvents other than dimethoxyethane contained in the mixture is up to 50%.

7. Process as claimed in claim 6, wherein the proportion of said organic solvents is 0.1 to 30% by weight.

**Revendications**

1. Procédé pour la préparation d'éthers de cellulose à partir de cellulose et d'agents d'éthérification en présence d'eau, de bases et de diméthoxyéthane comme solvant organique inerte, caractérisé en ce qu'on ajoute en plus au moins un autre solvant organique choisi parmi des alcanols, des alcanediols et des alcoxyalcanols.

2. Procédé selon la revendication 1, caractérisé en ce que le procédé est effectué en deux stades, a) un stade d'alcalinisation et b) un stade d'éthérification ultérieur, et les solvants organiques sont déjà ajoutés au stade a).

3. Procédé selon la revendication 1, caractérisé en ce que le procédé est exécuté en deux stades, a) un stade d'alcalinisation et b) un stade d'éthérification ultérieur, et les solvants organiques sont ajoutés après la fin du stade a) ou pendant la réalisation du stade b).

4. Procédé selon l'une quelconque des revendications 1 à 3, caractérisé en ce qu'on ajoute de 1 à 30 parties en poids de solvant organique par partie en poids de cellulose.

5. Procédé selon l'une quelconque des revendications 1 à 4, caractérisé en ce que, comme agent d'éthérification, on utilise un chlorure d'alkyle en $C_1$ à $C_3$, un oxyde d'alkylène en $C_2$ à $C_4$ et/ou un acide chloroalcanoïque en $C_2$ à $C_6$ ou un de ses sels ou un de ses esters.

6. Procédé selon l'une quelconque des revendications 1 à 5, caractérisé en ce que la proportion des solvants organiques différents du diméthoxyéthane atteint jusqu'à 50% dans le mélange.

7. Procédé selon la revendication 6, caractérisé en ce que la proportion de ces solvants organiques atteint de 0,1 à 30% en poids.